# EUROPEAN PATENT APPLICATION

(11) **EP 0 666 567 A1**
(43) Date of publication of application: **09.08.1995**
(21) Application number: 95200196.4
(22) Date of filing: 27.01.1995
(51) Int. Cl.: G11B 27/36, G11B 20/18

(54) **Arrangement for determining the write quality during magnetic recording**

(30) Priority: 03.02.1994 BE 9400129
(71) Applicant: Philips Electronics N.V., 5621 BA Eindhoven (NL)
(72) Inventor: Jochijms, Paulus Antonius Emil, NL-5656 AA Eindhoven (NL)
(74) Representative: van der Kruk, Willem Leonardus

(57) **Abstract**

An arrangement is proposed by means of which, although the read head is disposed before the write head, an indication can be obtained whether or not the information recorded by the write head is of satisfactory quality and, consequently, reliable.

## Description

The invention relates to an arrangement for writing an information signal in a track on a magnetic record carrier, comprising
- an input terminal for receiving the information signal,
- write means comprising a write head for writing the information signal in the record carrier,
- transport means for moving the record carrier past the write head,
- read means comprising a read head for reading information from a track on the record carrier.
A known principle is the "read-after-write" principle, which is used in recording an information signal in a track on a magnetic record carrier. For this, reference is made to the publication "Tonbandkassette oder Tonbandspule" in Funkschau 16/1982, pp. 39-42.

The information signal recorded in the track by means of the write head is read from the track by a read head disposed after the write head, upon which the quality of the signal thus read can be evaluated. In analog audio recorders it is known to effect this evaluation by auditively monitoring the signal thus read. This makes it possible to determine whether or not the recording quality is satisfactory. If the recording quality is poor this may have been caused by an incorrect tape transport or by dirt accumulated on the write head and/or the read head. This impairs the head-tape contact.

It is an object of the invention to provide another arrangement by means of which it is possible to determine whether the recorded information is of satisfactory quality. To this end the arrangement in accordance with the invention is characterised in that the write head and the read head are disposed close to one another, in that the read head is disposed before the write head, viewed in the direction of movement of the track relative to the write head and the read head, and in that the read head is adapted to read information previously recorded in the track in which the write head will subsequently record the information signal.

The invention is based on the recognition of the fact that if the read head is disposed before the write head it is still possible in some cases to read out a signal from which an indication can be obtained as to the quality of the recorded information, namely in those cases in which the read head and the write head are disposed close to one another. It is assumed that the track to be inscribed already contains previously recorded information. This can be achieved, for example, by prerecording a given signal, for example a tracking signal, in the tracks on (blank) record carriers, for example during manufacture.

When the heads are disposed close to one another a poor head-tape contact caused by accumulated dirt will lead not only to a poor recording of the new information but also to a poor reproduction quality when the old information is read. Thus, it is possible to obtain an indication that the head is to be cleaned.

Closely spaced heads are obtained, for example, if the write head and the read head have been integrated in one mechanical unit. The read head may then be of the magnetoresistive type.

The arrangement comprising detection means having an input coupled to an output of the read head, for determining the quality of the information read from the track by the read head, may be characterised in that the detection means are adapted to determine the quality of the information previously recorded in the track, and to generate a detection signal if the quality is not below a given limit value.

An embodiment in which the information signal is a digital information signal and the arrangement comprises clock signal generator means having an input for receiving an input signal, which generator means are adapted to generate a clock signal from the input signal in order to supply the clock signal to the detection means, is characterised in that the input of the clock signal generator means is coupled to an output of the read head. Since the read head now precedes the write head the clock signal with which the digital information is recorded by the write head cannot be used to subject the information read by the read head to bit detection in the detection means. Therefore, the clock signal should be derived from the signal read by the read head.

The arrangement may be characterised further in that the detection means are adapted to detect the absence of information recorded in the track and to generate an indication signal indicating the absence of information recorded in the track. This enables a distinction to be made between the absence of a signal in the track and the presence of a signal of poor quality in the track.

It is to be noted that when digital information is recorded, as in the case that a digital audio signal is recorded in a recorder of the DCC type, use is made of integrated write-read heads, the read head being of the MR type and the write head being an inductive head. For this, reference is made to the publication "New developments for the digital compact cassette system" by G. Lokhoff and P. van der Plas, IEEE Transactions, august 1993, Vol. 39, No. 3, pp. 350-355.

Moreover, it is to be noted that it is known from United States Patent 4,980,878, which corresponds to EP 19,924, to check a blank record carrier for defects in the optical medium by means of an additional light beam which precedes the write beam.

Embodiments of the invention will now be described in more detail with reference to the drawings. In the drawings
Figure 1a shows the positioning of the write head and the read head relative to a track, and Figure 1b shows the positioning of the write head and the read head relative to two tracks on a longitudinal record carrier,
Figure 2 shows an embodiment of the arrangement,
Figure 3a is a sectional view and Figure 3b is a side view of a combined write-read head in another embodiment,
Figures 4a and 4b show further embodiments of the arrangement in accordance with the invention.

Figure 1a shows diagrammatically a write head and a read head arranged close to one another. In the present example the write head and the read head have been integrated in a mechanical unit to form a write-read head combination 1. The write-read head combination 1 has a write section, of which a write gap 2 is shown, and a read section, of which a read gap 3 is shown. By means of the write gap 2 the write head records information in a track 4 on a record carrier, for example a longitudinal record carrier. An arrow 5 indicates the direction of movement of the track relative to the head combination 1. An input 6-6' is intended for receiving the information to be recorded, for example digital information. In Figure 1a the information recorded in the track 4 is represented diagrammatically by means of the vertical lines in the track 4. The read head reads information from the track 4 with the read gap 3. Since the read gap 3 is disposed before the write gap 2, viewed in the direction indicated by the arrow 5, off-tape monitoring of the recorded information is not possible. However, the read head 3 is capable of reading information recorded previously in the track 4. This previously recorded tape is represented diagrammatically by means of the oblique lines in the track 4. The signal read from the track 4 by the read gap 3 is applied to an output 7-7'.

Since the read gap 3 and the write gap 2 is disposed close to one another the previously recorded information read by the read gap 3 can be used in order to obtain an indication of the quality of the information recorded by means of the write gap 2. It is assumed that dirt has accumulated around the write gap 2, as result of which the head-tape contact has deteriorated. This has an adverse effect on the recording of the information to be written into the track, *i.e.* the magnetisation will be lower than desired. However, this accumulation of dirt also adversely affects the head-tape contact at the location of the read gap 3 because the write gap and the read gap are disposed close to one another. This means that the quality of the previously recorded signal being read is low.

It is now assumed that the magnetic material of the record carrier is of poor quality. This means that the previously recorded signal is of poor quality. The signal read by the read gap 3 then also has a level which is too low. Consequently, this is also an indication that the write process is unreliable.

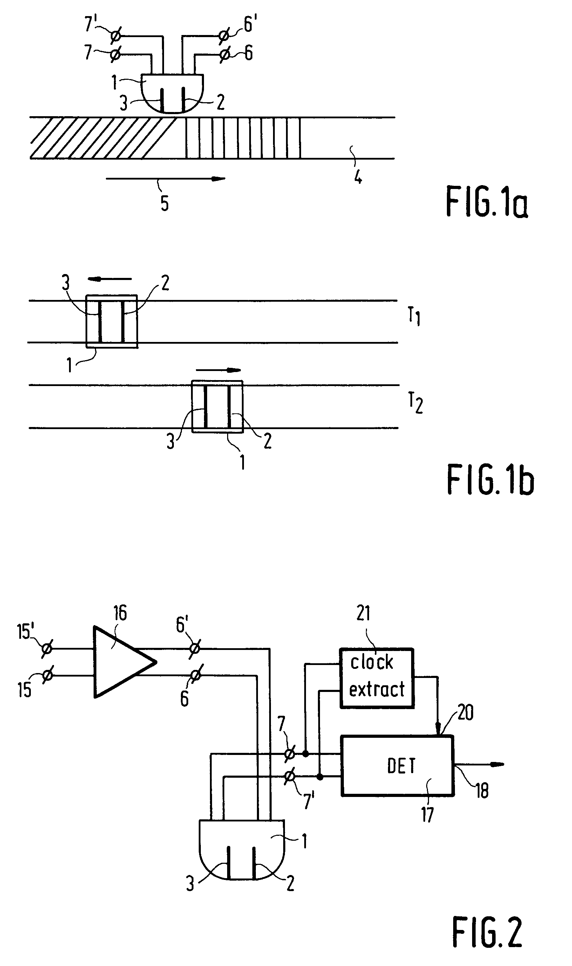

A situation in which information is recorded in a track by a write head and the read head is disposed before the write head occurs, for example, when information is recorded in a plurality of adjacent tracks on a longitudinal record carrier. Figure 1b is a plan view of a part of the record carrier with two tracks T₁ and T₂. A larger number of tracks may extend parallel to the tracks T₁ and T₂ on the record carrier. To record information in the track T₁ by means of the head combination 1 the head combination 1 moves from right to left in Figure 1b. When the head combination 1 reaches the end of the record carrier and subsequently information is to be recorded in the track T₂ the head combination 1 can be moved vertically (*i.e.* downwards in Figure 1b), and the transport direction of the record carrier is reversed, so that the head combination moves from left to right in the Figure in order to record the information in the track T₂. Since the head combination is not rotated through 180° when the head combination moves from the track T₁ to the track T₂ this means that the read gap 3 is situated before the write gap 2 while the track T₁ is recorded. This means that the normal "read-after-write" procedure could be used while the track T₂ is recorded.

Figure 2 shows an embodiment of the arrangement. The arrangement has an input terminal 15-15' for receiving the information signal to be recorded. After amplification in a write amplifier 16 this information signal is applied to the input 6-6' of the write head so as to be recorded in the track 4 by means of the write gap 2. The output 7-7' of the read head is coupled to an input of a detector 17. The detector 17 can produce a detection signal on an output 18 of the detector 17.

The detector 17 is adapted to determine the quality of the information read from the track 4 by the read gap 3. This can be realised, for example, in that the detector 17 determines the signal level of the read signal by means of a level detector. If the signal level exceeds a given threshold value the quality of the read signal is considered to be satisfactory and if the signal level is below the threshold value the read signal quality is considered to be unsatisfactory. In the last-mentioned case the detector 17 may generate a detection signal and supply this to the output 18. This output may be coupled to, for example, an optical indicator device (not shown) to provide an optical indication that the recording is unreliable. It is to be noted that the recorded information to which the detector responds may be analog information or digital information.

Alternatively, the detector 17 may be of another construction. It is also possible to perform a real read-out of the recorded information. In the case of digital information the detector 17 can receive a clock signal *via* a clock signal input 20, for clocking the incoming data, in order to perform bit detection upon the read signal. In the case of read-after-write monitoring these clock signals are generally derived from the information to be recorded. In the present case a clock signal generator 21 the clock signal is extracted from the read information by means of a clock signal generator 21. The quality of the read-out digital information can now be determined, for example, by examining the bit-error rate. If the bit-error rate exceeds a given threshold value the quality is assumed to be too low.

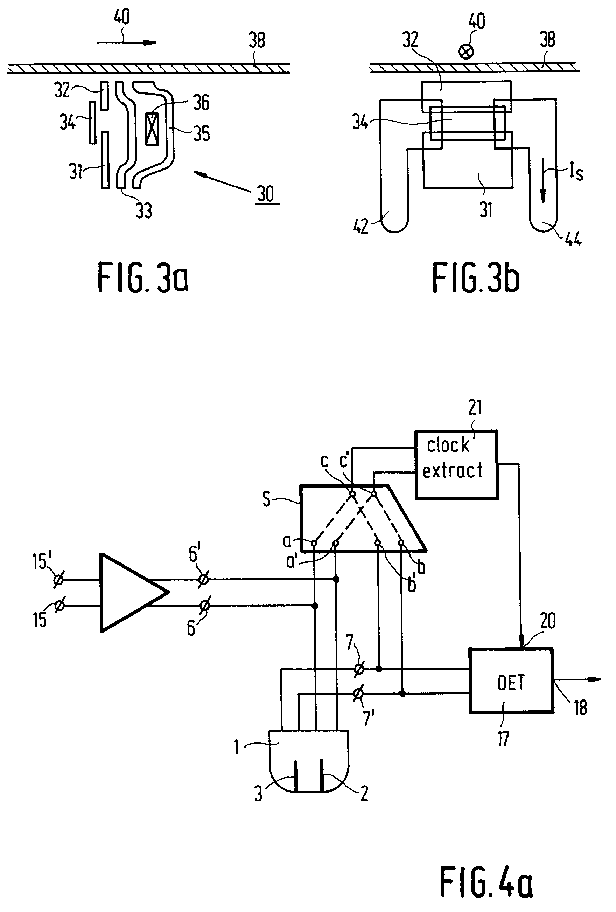

Figures 3a and 3b show diagrammatically a combined write-read head 30 for recording and reading an information signal in/from the same track on a record carrier. Such write-read heads have been described comprehensively in the literature, so that only a brief description will be given. Figure 3a is a cross-sectional view of the magnetic head, which cross-sectional view extends in the longitudinal direction of the track halfway the width of the track. The read section of the magnetic head 30 is of the magnetoresistive (MR) type and comprises flux guides 31, 32 and 33 and the MR element 34. The write section of the head comprises flux guides 33 and 35 and a coil, shown diagrammatically as the element 36. The record carrier bears the reference numeral 38 and is moved pas the magnetic head 30 in the direction indicated by an arrow 40. All these elements have been embedded in a substrate body.

Figure 3b is a view from the left in Figure 3a and shows the flux guides 31 and 32, the MR element 34, and the electrical connections 42 and 44 to the MR element 34. Variations in magnetisation in the track lead to variations in the magnetic flux which propagates through the flux guides 31, 32 and 33 and through the element 34. These flux variations lead to variations in the electrical resistance across the MR element 34 and, as a result of the current Iₛ through the element 34, to voltage variations across the element.

A combined write-read head as shown in Figures 3a and 3b can be used, for example, in a write-read device as used in a recording and reproducing apparatus of the DCC type.

By means of Figure 1b it has been explained that in the embodiment shown in Figure 1b a track T₁ is inscribed with new information from right to left and subsequently a track T₂ is inscribed from left to right. It has also been set forth that normal read-after-write monitoring can be applied while writing in the track T₂ but that this is not possible while writing in the track t₁. In the embodiment shown in Figure 4a a change-over is effected from the detection mode in accordance with the invention to the normal read-after-write mode when changing over from recording in track T₁ to recording in track T₂. The embodiment shown in Figure 4a bears much resemblance to the embodiment shown in Figure 2. An additional switch S has its fixed terminal c-c' coupled to the input of the clock signal generator 21, a terminal a-a' being coupled to the output of the amplifier 16 and the terminal b-b' being coupled to the output 7-7'. During recording in the track T₁ the switch S is in the position in which the terminals b-b' and c-c' are coupled to one another. The arrangement is then in the detection mode in accordance with the invention. During recording in the track T₂ the switch S is in the position in which the terminals a-a' and c-c' are interconnected. In this case the normal read-after-write mode is operative. The switch S can be set automatically to the correct position by means of a control signal depending on the direction in which a track is inscribed by the head combination 1 during recording.

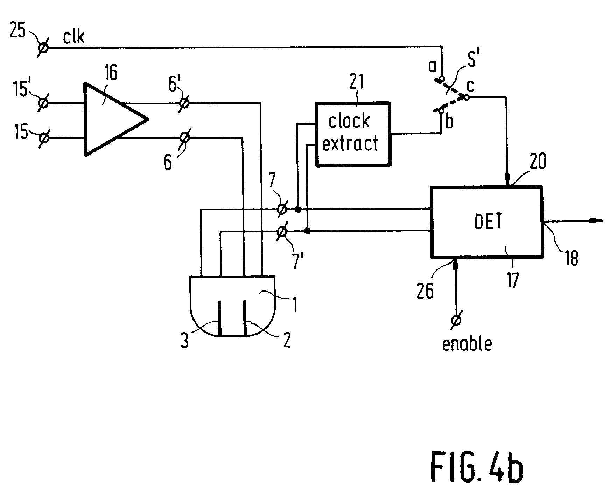

Figure 4b shows another embodiment. In comparison with the embodiment shown in Figure 4a the switch S has been dispensed with and a switch S' has been added after the clock signal generator 21. In this embodiment it has been assumed that, in addition to the (digital) information applied *via* the input 15-15', an associated clock signal clk corresponding to the bit clock in the information applied *via* the input 15-15' is available (or is applied *via* the terminal 25). When the track T₂ is inscribed the switch S' is in the position in which the terminals a and c are interconnected. The normal read-after-write mode is now operative. The switch S' can again be set automatically to the correct position by means of a control signal depending on the direction in which a track is inscribed by the head combination 1 during recording.

Moreover, an enable signal can be applied to the detector 17 *via* an enable input 26. When digital information is written by means of the gap 2 crosstalk to the read gap 3 may occur, which could adversely affect the detection in the detector 17. The enable signal, which can be generated in the arrangement itself, now ensures that the detector operates only if no recording is effected. Particularly in the case of a recording by means of a pulsed drive the pulses for recording the information are combined in groups and generated with a higher frequency. This results in time intervals between the groups of write pulses in which no writing is effected. In these time intervals the detector 21 can be switched on by means of the enable signal.

Thus, by means of the invention it is achieved that although the read head is disposed before the write head an indication can be obtained whether or not the information recorded by the write head is of satisfactory quality and is consequently reliable.

## Claims

1. An arrangement for writing an information signal in a track on a magnetic record carrier, comprising
- an input terminal for receiving the information signal,
- write means comprising a write head for writing the information signal in the record carrier,
- transport means for moving the record carrier past the write head,
- read means comprising a read head for reading information from a track on the record carrier,
characterised in that the write head and the read head are disposed close to one another, in that the read head is disposed before the write head, viewed in the direction of movement of the track relative to the write head and the read head, and in that the read head is adapted to read information previously recorded in the track in which the write head will subsequently record the information signal.

2. An arrangement as claimed in Claim 1, characterised in that the arrangement comprises detection means having an input coupled to an output of the read head, for determining the quality of the information read from the track by the read head.

3. An arrangement as claimed in Claim 1 or 2, characterised in that the write head and the read head have been integrated in one mechanical unit.

4. An arrangement as claimed in Claim 1, 2 or 3, characterised in that the read head is of the magnetoresistive type.

5. An arrangement as claimed in Claim 2, or in Claim 3 or 4 when appendant to Claim 2, characterised in that the detection means are adapted to determine the quality of the information previously recorded in the track, and to generate a detection signal if the quality is not below a given limit value.

6. An arrangement as claimed in any one of the preceding Claims, in which the information signal is a digital information signal and the arrangement comprises clock signal generator means having an input for receiving an input signal, which generator means are adapted to generate a clock signal from the input signal in order to supply the clock signal to the detection means, characterised in that the input of the clock signal generator means is coupled to an output of the read head.

7. An arrangement as claimed in any one of the preceding Claims, characterised in that the detection means are adapted to detect the absence of information recorded in the track and to generate an indication signal indicating the absence of information recorded in the track.
